# EUROPEAN PATENT APPLICATION

(11) **EP 2 279 933 A2**
(43) Date of publication of application: **02.02.2011**
(21) Application number: 10007846.8
(22) Date of filing: 28.07.2010
(51) Int. Cl.: B62H 1/12, B62H 7/00, B62J 1/28

(54) **Device for bicycles**

(30) Priority: 31.07.2009 IT MI20091389
(71) Applicant: Turina, Luigi, 23874 Montevecchia (LC) (IT)
(72) Inventor: Turina, Luigi, 23874 Montevecchia (LC) (IT)
(74) Representative: Gislon, Gabriele

(57) **Abstract**

A device for assisting disabled persons or learners to ride a bicycle comprises a structure (S) provided with two portions (1,1') integral with each other at one end and free at the opposite end forming a "U" shape, means for fixing said structure (S) to the bicycle in at least three points, two (10,10') on the rear wheel hub (3) and one (4) directly or indirectly on the bicycle frame; the upright portions (1,1') are interconnected by at least one cross member (7;12) provided with means for adjusting the distance between the same and can be connected to a secondary structure which comprises two supporting wheels (11,11') and means for the height adjustment thereof with respect to the main structure (S).

## Description

The present invention concerns a device for fitting on a bicycle to assist disabled persons or learners, to control the movement thereof. More specifically, the present invention concerns a device in the form of a structure which can be fitted at the rear of any commercially available bicycle so that it can be used by disabled persons or persons who are learning to ride a bicycle, also without assistance.

The known commercially available bicycles do not offer devices suitable for preventing learner riders who are also disabled with problems of coordination from falling off. For said users special bicycles are produced but these are costly, since they are produced *ad hoc,* and are particularly unattractive; in other words, a disabled child or adult has to use a bicycle which identifies him/her from far away as disabled and is furthermore much more expansive than an ordinary bicycle. An example of these bicycles for the disabled is known for example from GB2118495, shown in fig. 5.

Accessories with training wheels designed to be fitted near the rear wheel to limit, or annul, the lateral inclination of the bicycle, thus helping to limit the risk of the rider falling off, are known. Said means are effective for small children who are learning to ride, but they are not able to guarantee the safety of a rider with problems of coordination which cause him/her to move the upper part of his/her body, shifting the centre of gravity outside the area within which it is possible to maintain effective balance.

The conventional bicycle is also awkward for the person assisting the cyclist in his/her action as it does not offer convenient, safe and easily accessible gripping points to prevent the cyclist falling off when he/she is learning to ride without training wheels.

CA2270482 describes a device for helping learners. It provides a grip for supporting the bicycle rider. Said device comprises three fastening points to the frame, two of which are arranged at the opposite ends of the rear wheel hub axle, and a third on the frame.

US 5338204: describes a device via which the bicycle rider can be supported and the movement of the bicycle itself can be controlled. The device described is provided with two fixing points at the ends of the rear wheel hub axle and a further fixing point to the frame. The device described is furthermore provided with means for operating retractable stabiliser wheels.

FR 2909970: describes an aid which provides a grip for supporting the bicycle rider in addition to three fastening points to the frame, two of which are arranged at the opposite ends of the rear wheel hub axle, and one on the frame. Said device is also provided with a means for adjusting the angle of the supporting device.

The means known in the art are all directly fixed to the shaft of the rear wheel hub, or alternatively on the frame. Said type of fixing results in a flexural stress on the hub shaft to counter the moment of unbalance induced by the bicycle rider and/or the stress deriving from the stabiliser wheels.

Alternatively, as for example in FR 2909970, the stress described is discharged onto the fork of the rear triangle, or in general onto the fixing point on the frame which is not usually sized to withstand said types of stress.

The object of the present invention is to solve the above-mentioned problems and provide a device which can protect the disabled person from falls and assist him/her in riding a bicycle, which can be used on any ordinary commercially available bicycle and which is sturdy, resistant and reliable. A further object of the invention is to provide a device which can help with instruction of a learner bicycle rider.

Said objects are achieved by the present invention, which concerns a device for a bicycle for disabled persons or learners, characterised according to claim 1. Said device comprises a structure (S) provided with two upright portions, integral with each other at one end and free at the opposite end and means for fixing said structure to said bicycle positioned in at least three points, two of said fixing means being arranged on opposite sides of the rear wheel and at least one being arranged to connect directly or indirectly to the frame of said bicycle; said upright portions are connected to each other by at least one cross member provided with means for adjusting the distance between said uprights. According to the invention, the fixing means comprise a tubular supporting structure provided with a frame engagement face and extending laterally to said bicycle, the free ends of said structure being fixed to the tubular supporting structure and spaced from the frame.

The third additional point is chosen to stabilise the structure against stress longitudinal to the bicycle.

Preferably the two portions of the structure are in one single piece and are formed of a profile bent into a "U" shape with the free ends facing downwards and indirectly secured to the rear wheel hub of the bicycle.

In a preferred embodiment, the third fixing means comprises an arm secured to the structure S by means of one of the cross members which interconnect the upright portions of the structure S; the arm is length-adjustable and can be fixed to the seat tube or seat post of the bicycle. According to a further embodiment, the invention furthermore comprises two supporting wheels which can be fitted on the structure and are provided with means for adjusting their height from the ground with respect to the structure itself.

The fixing means of the structure S on the rear wheel comprise two bushes for housing the threaded ends of the hub of said rear wheel of the bicycle; the bushes are secured to a tubular arm to which the wheels are secured and they are furthermore provided with two holes for housing the threaded ends of the structure S. Said ends are secured by at least one check nut.

As can be seen from the figures, the structure S extends vertically above the rear wheel and forms a type of handle which can be gripped by the person assisting the cyclist, whether a disabled or a learner. The structure is thus able to provide a gripping area very near to the person assisting the cyclist, and is therefore also more convenient, safer and quicker to reach.

In a preferred embodiment designed for use by disabled persons, the structure S comprises a supporting element to stabilise and secure the chest of the cyclist in a comfortable safe position, thus limiting movements leading to dangerous falls. Said support is fitted on the structure S by means of a length-adjustable arm in turn fitted on a cross member which connects the portions of the structure S.

The device according to the present invention has numerous advantages.

The device of the invention features a simple and sturdy construction, it has a very limited cost and can be fitted on any commercially available bicycle. This allows an ordinary bicycle to be adapted for use by disabled persons with extremely limited costs. Furthermore, the device is very discreet and does not interfere with the image of the original bicycle on which it is fitted; this results in a considerable psychological advantage for the disabled rider, since the bicycle used by him/her is a "normal" bicycle and not a bicycle built specifically for a disabled person.

The sturdiness of the structure and the fitting on the rear hub mean that the device can be used also by adult disabled persons. The stress is discharged onto the entire structure and the hub is stressed by tensile strength rather than bending, as occurs in the known devices.

Furthermore, the same structure, without chest support, can be used as a means for helping to teach anyone how to ride a bicycle without stabiliser wheels: once the chest support and the stabiliser wheels have been removed, the handle structure provides the person assisting the cyclist with a gripping area which is close to hand, convenient and safe, and means that said person does not have to bend to support the bicycle at the level of the saddle.

The invention will now be illustrated in greater detail, with reference to the drawings attached by way of non-limiting example, in which:
- fig. 1 is a schematic view of the device fitted on a bicycle;
- fig. 2 is a schematic view in section of the preferential means for fixing the structure S to the bicycle;
- figures 3A and 3B are lateral and frontal views of the device according to the invention;
- figures 3C and 3D are overhead views of one of the fixing means of the structure S to the bicycle and of an element for supporting and securing the chest of the disabled person, respectively;
- fig. 4 is a schematic view partially in section of a bicycle pedal for use with the device according to the invention; and

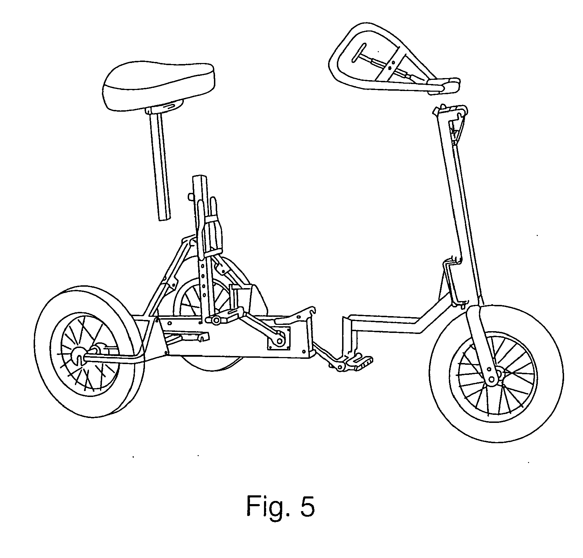

- fig. 5 illustrates a known type of bicycle for disabled persons.

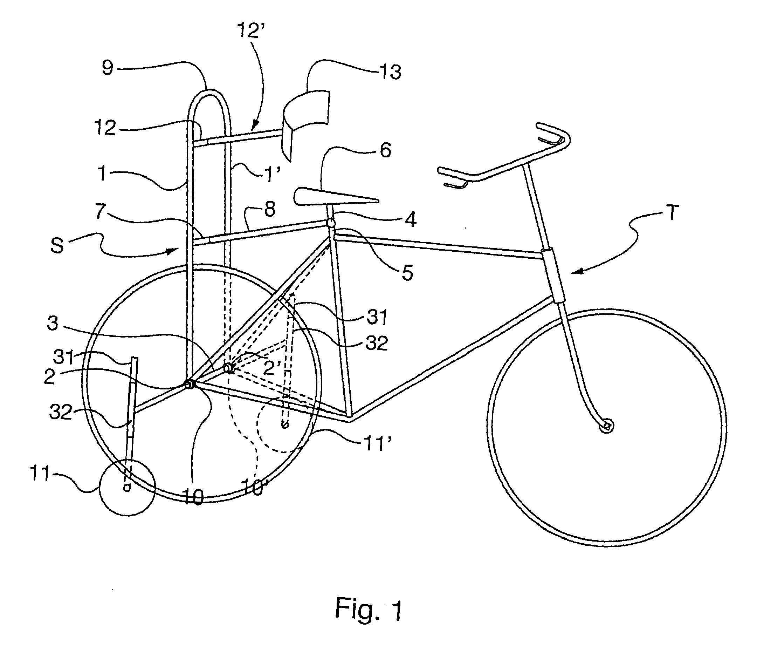

With reference first to figure 1, the device comprises a "U" shaped structure S, which comprises two portions of main bar 1, 1' acting as uprights, integral with each other at one end and free at the opposite end.

Means are provided for fixing said structure to the bicycle positioned in at least three points, two 10, 10' of said fixing means being arranged on opposite sides of the rear wheel P and at least one, shown by reference number 4, connecting directly or indirectly to the frame of said bicycle. The upright portions 1, 1' are connected to each other by at least one cross member provided with means for adjusting the distance between said uprights.

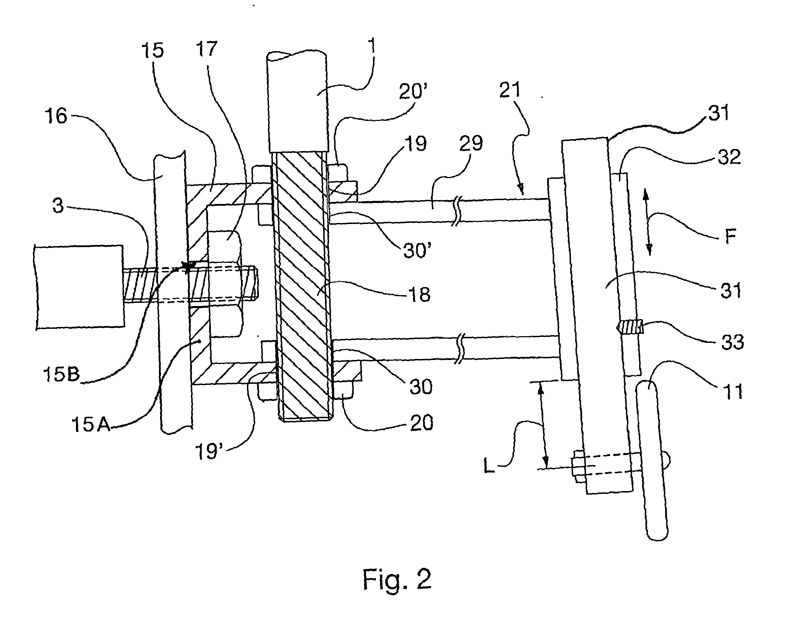

In the case illustrated (see fig. 2) the two points 2, 2' for attachment of the ends of the structure S are positioned at the level of the hub 3 of the wheel. Alternative attachment points can be obtained on the rear fork, or in any part of the rear triangle on condition that there is at least one for each of the two sides of the bicycle.

According to the invention, the structure is attached to the frame by the interposition of a tubular supporting structure 15, provided with a frame engagement face. In the embodiment of fig. 2, the tubular supporting structure comprises a pair of bushes, of which only the right-hand bush 15 is shown; the bush 15 has a wall 15A which, via an aperture 15B, fits onto the threaded end of the hub 3 and rests on a portion of frame 16. The hub 3 extends inside the bush 15 which is secured to the frame 16 by means of a nut 17 which tightens on the thread of the hub 3.

The bush 15 is provided with two holes 19, 19' aligned on a vertical axis corresponding to the axis of the uprights 1 or 1'; the holes 19, 19' are spaced from the frame 16 to allow the end of the hub 3 to be housed in the bush 15.

In the embodiment of fig. 2, the tubular supporting structure also comprises the tubular element 29 which is fixed to the bush 15 and which in turn supports a stabiliser wheel 11.

A threaded end 18 of the upright portion 1 passes through the holes 19, 19' and is secured to the bush 15 by two nuts 20, 20'; the bushes 15 or, more in general, the fixing means 10,10' therefore have the function of discharging onto the frame at least part of the stress transmitted by the structure S. A further function of the means 10 and the bush 15 is that of providing a particularly robust assembly point to stiffen, together with the element 29, the adjustable structure 21 on which the stabiliser wheels 11, 11' are mounted and discharging the stress generated during use, avoiding or drastically reducing the stress on the hub 3.

The adjustable structure 21 consists of a tubular element 29, a second tubular element 32 and a bar 31 housed inside the tubular element 32. As shown in fig. 2, the tubular element 29 is fixed by means of two holes 30, 30' to the structure S by means of the bush 15. More specifically, the two threaded ends 18 of the main bar engage both the two holes 19, 19' of the bush 15 and the two holes 30, 30' obtained in the tubular element 29 of the adjustable structure 21. The nuts 20, 20', once tightened on the bush 15, have the purpose of fixing to the same both the two sections 1, 1' of the main bar and the structure 21.

In an alternative embodiment, the tubular element 29 and the bush 15 can be made of one single tubular element. In said embodiment, the tubular element, or guide, 32 described below, is provided with a hole or, alternatively, is formed of two portions, to permit access to the hub 3 and more specifically to permit access to the locking nut 17 to tighten it or remove it from the rear wheel hub shaft, to which it is secured by a wall which is perforated for the passage of said shaft 3.

The end of the tubular element 29 opposite the fixing holes 30, 30' is rigidly secured to a second tubular element 32, which has a slightly angled position with respect both to the perpendicular to the tubular element 29 and to the ground when the bicycle is in the riding position. For example the angle with respect to the vertical is between 3 and 30°.

A further tubular element, or an arm 31, to which one of the wheels 11 is secured, runs inside the tubular element 32 (as shown by the arrow F). A grub screw 33 or equivalent fastening means lock the arm 31 in the required position after height-adjusting the position of the wheel 11, i.e. after adjusting the distance L between the axle of the wheel 11 and the lower end of the guide 32 and consequently the position with respect to the ground and the hub 3 of the wheel 11.

As can be seen, the stress induced on the main bar deriving from the moment of unbalance induced by the rider is discharged onto the bush 15, together with the tubular element 29. In fact, the unbalance torque, applied via the bicycle saddle, no longer creates, as in the known art, bending moments at the device attachment point, since they are discharged onto the bush 15 to minimise stress on the frame and/or the rear wheel hub shaft.

The stress described, as said, is discharged onto the tubular element 29 and the bush 15 via the device subject of the present invention. Said stress is discharged due to the fact that the moment of unbalance is balanced due to reaction forces which, in the present invention, act in zones that do not belong to the bicycle but are positioned, as said, at the level of the tubular element 29 and the bush 15.

In particular, unlike what occurs with the known devices in which the wheels are mounted directly on the rear wheel hub, in the present invention the stress is discharged onto the tubular supporting structure 29 and 15 and, via it, also onto the remaining structure S. In this way, the hub 3 is substantially stressed by tensile strength rather than bending; furthermore, as said, the direct upward force deriving from the wheel 11 is partly discharged onto the structure S which, due to the presence of the arm 8 and the cross members 7 and 12, as described below, is a lattice type structure.

The two upright sections 1, 1' of the structure S can be of the telescopic type; however, it has been found that the preferential embodiment shown, in which said structure is in one single piece with a bent profile, can be adapted to bicycles of different sizes. In fact, the arm 31 running in the tubular element 32 has a sufficient length to adapt the device to bicycles with wheels of larger diameter, increasing the distance L when the arm is fully extended downwards. Vice versa, by sliding the arm 31 upwards, the distance L is reduced and the device can be adapted to bicycles of smaller sizes. In general, the height of the structure S is between 700 and 900 mm, and more preferably between 750 and 850 mm.

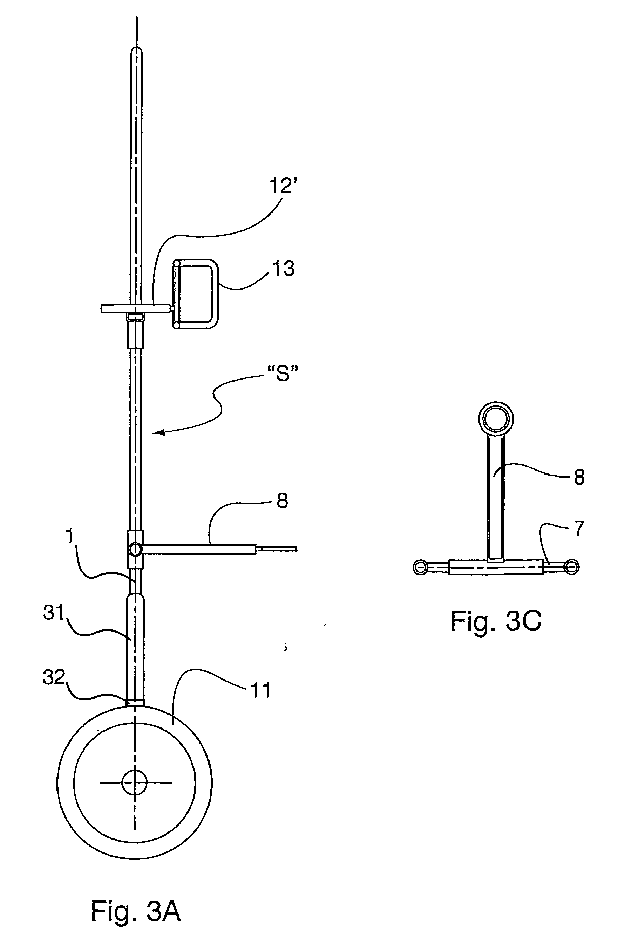

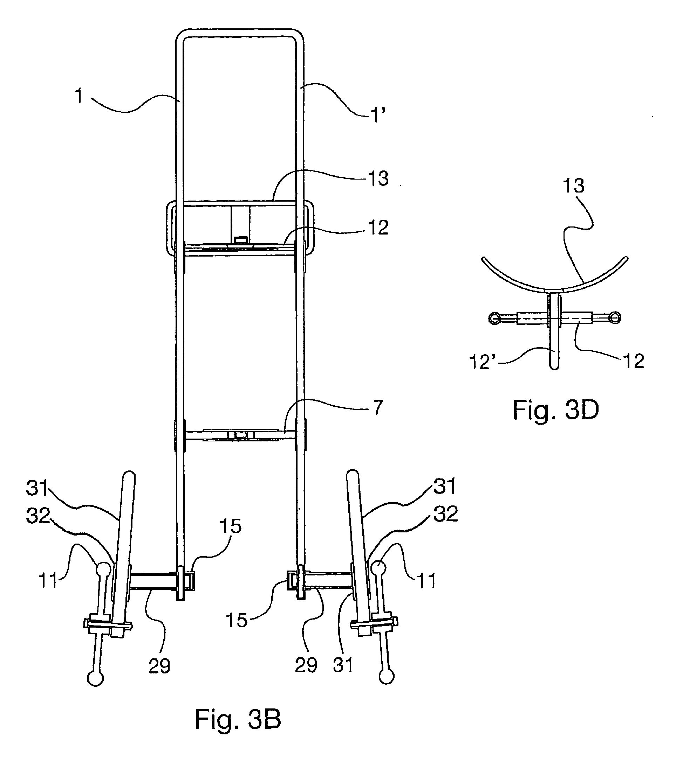

Between the two sections of the main bar 1, 1' a cross member 7 (fig. 3C) is provided which can be telescopically adjusted in order to adapt it to the distance at which the two sections of the main bar 1, 1' are positioned according to the width of the rear wheel hub.

Said cross member 7 supports an element for connection with the frame T, length-adjustable, the end of which is provided with an eyelet or other means 4 which hooks to the above-mentioned third point designed to counter the stress of the structure in a direction longitudinal to the bicycle.

The structure S is provided, in fact, with a third fastening point, for stabilisation against stress longitudinal to the bicycle, along the seat tube 14 or alternatively along the seat post 5 or on the saddle itself.

In the embodiment illustrated, the two portions 1, 1' are in one single piece and the structure S is formed of one single profile bent in a "U" shape in an upper deformation zone 9 which allows a good adaptation range to the different widths of the bicycle on which the structure is mounted. The two portions 1, 1' can also be separate sections joined by means of an appropriate coupling, not shown, which permits the spacing thereof, or the inclination necessary to adapt them to the bicycle on which the structure is mounted.

The structure, or any other accessories not shown which can be mounted on it, is able to provide a more convenient, safer and more accessible gripping area for the person assisting the cyclist since it is located in a position raised and set back from the bicycle, and therefore nearer to the person assisting the cyclist.

The structure S described features (fig. 3D) a further cross member 12 positioned above the cross member 7 and also telescopic, able to house, via a further cross member 12', a support 13 for the cyclist's chest. The support 13 is provided with adequate padding and belts (not shown) for maintaining the chest against the support, in order to limit the movements thereof and prevent the disabled cyclist from falling off.

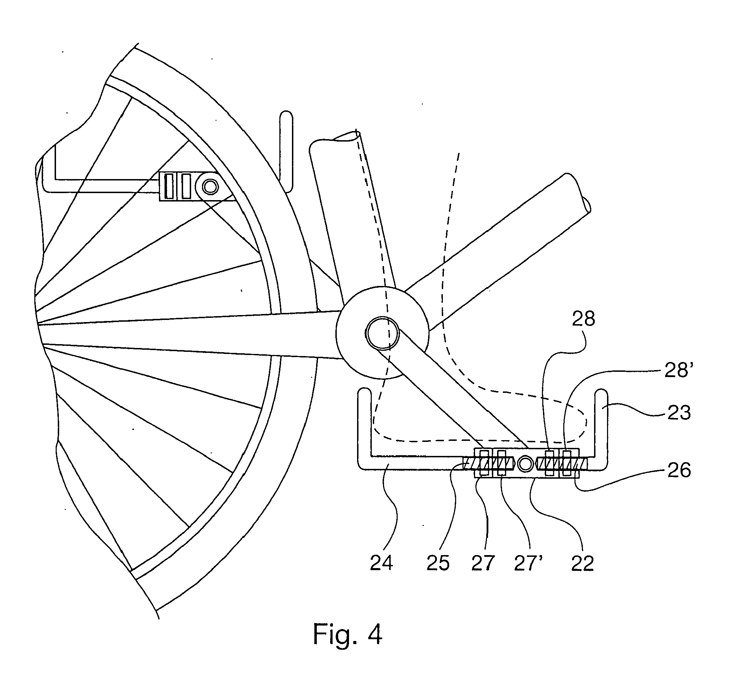

A further device to facilitate use of the bicycle by disabled persons, which permits stabile positioning of the foot on a conventional type pedal, is shown in figure 4. Said device allows the use of two L-shaped metal structures 23, 24 provided with a threaded end 25, 26 each. The structure 23 is inserted in the pedal 22 via the holes normally present in the pedal and is fixed to it by the locking nuts 28, 28'; in the same way, the structure 24 is fixed to the pedal 22 by means of the locking nuts 27, 27'.

The system described can be adjusted by means of the locking nuts which allow the distance between the two L-shaped structures 23, 24 to be adapted to the size of the cyclist's feet due to the possibility of tightening the above-mentioned nuts 27, 27' and 28, 28' in arbitrary points along the respective threaded ends 25, 26. Belts or hooks (not shown) are also provided to secure the rider's feet to the pedal.

The structure provided by the bush 15 and/or by the tubular element 29 is able to perform different functions, acting as a support for the structure S, or for any carrier, signalling devices, footboards and similar.

## Claims

1. Device for bicycle to assist disabled persons or learners, which comprises a vertical structure (S) provided with two upright portions (1, 1') integral with each other at one end and free at the opposite end (18), means for fixing said structure to said bicycle in at least three points, two (10, 10') of said fixing means being arranged on opposite sides of the rear wheel (P) and at least one (4) being arranged to connect directly or indirectly to the frame of said bicycle, **characterised in that** said at least two fixing means (10, 10') comprise a tubular supporting structure (15; 29) provided with a frame engagement face and extending laterally to said bicycle, the free ends of said vertical structure (S) being fixed on said supporting structure (15; 29).

2. Device as claimed in claim 1, wherein said tubular support structure (15; 29) is fixed to said frame at the level (16) of the hub (3) of the rear wheel of said bicycle and is substantially coaxial with said hub (3).

3. Device as claimed in claim 1 or 2, wherein said tubular structure (15; 29) comprises at least one aperture (15B) to house the end of the hub (3) of said rear wheel of the bicycle and to lock said tubular structure in position on said hub via locking means 17.

4. Device as claimed in any of the preceding claims wherein each tubular supporting structure (15; 29) supports directly or indirectly (29, 32) a stabiliser wheel (11, 11').

5. Device as claimed in claim 4, comprising means (31-33) for height adjustment of said stabiliser wheels (11, 11') with respect to the structure itself.

6. Device as claimed in claim 5, wherein said wheel (11, 11') is fixed to a tubular arm (31) which runs in a guide (32) integral with said tubular supporting structure (15; 29) to perform said height regulation.

7. Device as claimed in claim 6, wherein said guide (32) is perforated or produced in two portions to permit access to said hub (3).

8. Device as claimed in any of the preceding claims, wherein said third fixing means (4) comprises an arm (8) secured to the structure S and length-adjustable, said arm being fixable to the seat tube (14) or to the post of the saddle (6) of the bicycle.

9. Device as claimed in claim 8, wherein said element (8) is mounted on at least one cross member (7) connecting the upright portions (1, 1').

10. Device as claimed in any of the preceding claims, wherein said two upright portions (1, 1') are in one single piece and are formed of the arms of a "U" shaped structure, the ends of which are provided with said fixing means (10, 10').

11. Device as claimed in any claim 1 to 10, wherein said supporting structure (15; 29) is provided with two holes (19, 19') inside which a threaded end (18) of the corresponding upright portion (1) passes in order to be secured to said supporting structure (15; 29).

12. Device as claimed in any of the preceding claims, further comprising an element (13) for supporting and securing the rider's chest.

13. Device as claimed in claim 12, wherein said supporting and securing element (13) is mounted on a cross member (12) for connection of said upright portions of said structure (S) and is provided with a length-adjustable arm (12').

14. Device as claimed in any of the preceding claims, further comprising pedals provided with means for retaining the rider's feet.
